# EUROPEAN PATENT APPLICATION

(11) **EP 4 707 431 A1**
(43) Date of publication of application: **11.03.2026**
(21) Application number: 25198780.6
(22) Date of filing: 28.08.2025
(51) Int. Cl.: C25B 1/04, C25B 1/23, C25B 1/27, C25B 3/03, C25B 3/07, C25B 3/26, C25B 9/23, C25B 11/031, C25B 11/052, C25B 11/061, C25B 11/065, C25B 11/077, C25B 11/081, C25B 11/091, C25B 11/093, C25B 11/097

(54) **ELECTRODE**

(30) Priority: 30.08.2024 JP 2024148309
(71) Applicant: KABUSHIKI KAISHA TOSHIBA, Kawasaki-shi, Kanagawa, 212-0013 (JP)
(72) Inventor: FUKAZAWA, Taishi, Kawasaki-shi (JP); YOSHINAGA, Norihiro, Kawasaki-shi (JP); YAMAGIWA, Masakazu, Kawasaki-shi (JP); SUGANO, Yoshitsune, Kawasaki-shi (JP)
(74) Representative: Marks & Clerk LLP

(57) **Abstract**

An electrode according to an embodiment includes a support and a catalyst layer having a structure in which sheet layers and gap layers are laminated alternately. The gap layers comprise a first oxide comprising a first element which is one or more elements selected from the group consisting of Ti, Al, Ta, Nb, Hf, Zr, Zn, W, Bi, and Sb.

## Description

### FIELD

Embodiments described herein relate generally to an electrode, a membrane electrode assembly, an electrochemical cell, a stack, and an electrolyzer.

### BACKGROUND

In recent years, electrochemical cells have been actively studied. Among electrochemical cells, for example, a polymer electrolyte electrolysis cell (PEMEC) is expected to be used for hydrogen generation in a large-scale energy storage system. In order to ensure sufficient durability and electrolytic properties, platinum (Pt) nanoparticle catalysts are generally used for PEMEC cathodes, and noble metal catalysts such as iridium (Ir) nanoparticle catalysts are used for positive electrodes. Additionally, a method for obtaining hydrogen from ammonia is also considered. In addition, a method for obtaining organic material or carbon monoxide by electrolysis of carbon dioxide is also considered.

### BRIEF DESCRIPTION OF THE DRAWINGS

FIG. 1 is a schematic diagram of an electrode according to an embodiment;
FIG. 2 is a partial schematic cross-sectional diagram of an electrode according to an embodiment;
FIG. 3 is a partial schematic diagram of an electrode according to an embodiment;
FIG. 4 shows analysis spots according to an embodiment;
FIG. 5 is a schematic diagram of a membrane electrode assembly according to an embodiment;
FIG. 6 is a schematic diagram of an electrochemical cell according to an embodiment;
FIG. 7 is a schematic diagram of a stack according to an embodiment;
FIG. 8 is a schematic diagram of an electrolyzer according to an embodiment; and
FIG. 9 is a table relating to examples.

### DETAILED DESCRIPTION

An electrode according to an embodiment includes a support and a catalyst layer having a structure in which sheet layers and gap layers are laminated alternately. The gap layers comprise a first oxide comprising a first element which is one or more elements selected from the group consisting of Ti, Al, Ta, Nb, Hf, Zr, Zn, W, Bi, and Sb.

Hereinafter, the embodiments will be described with reference to the drawings. It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

The thickness and structure of members described in the specification can be known, for example, from one or more of images obtained by SEM (Scanning Electron Microscope), TEM (Transmission Electron Microscope), HAADF-STEM: High-Angle Annular Dark Field Scanning Transmission Electron Microscopy), and the like. The boundaries of the members described in the specification can be determined from one or more images obtained by scanning electron microscopy or transmission electron microscopy, SEM-EDS (Scanning Electron Microscopy with Energy Dispersive X-ray Spectroscopy) or TEM-EDX (Transmission Electron Microscopy with Energy Dispersive X-ray Spectroscopy), SIMS (Secondary Ion Mass Spectrometry), and the like. The composition of the members described in the specification can be determined by one SIMS, ICP-MS (Inductively Coupled Plasma Mass Spectrometry), SEM-EDX, TEM-EDX, or the like. The crystallinity of the members described in the specification can be evaluated, for example, from XRD (X-ray Diffraction), EBSD (Electron Backscatter Diffraction), images obtained by HAADF-STEM, SEM, TEM or the like. Materials included in the members described in the specification (crystal defects, bonding states, etc.) can be evaluated from HAADF-STEP, PL (Photoluminescence), XPS (X-ray Photoelectron Spectroscopy), or the like. These analysis methods are examples and do not negate the specific analytical methods described in the specification.

### (FIRST EMBODIMENT)

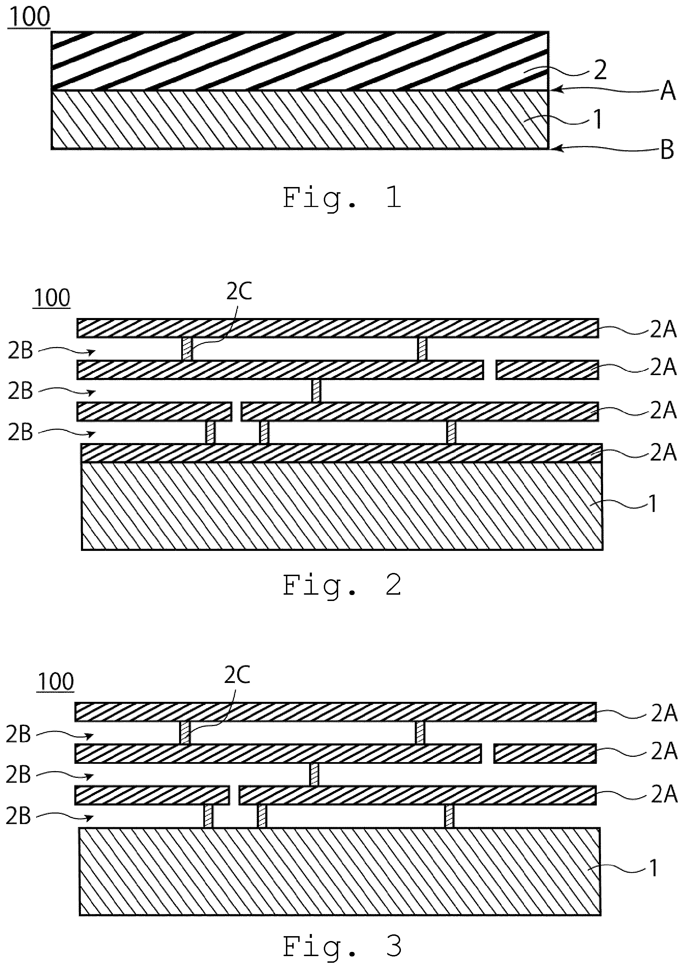

A first embodiment relates to an electrode. A cross-sectional schematic diagram of an electrode 100 according to the embodiment is shown in FIG. 1. The electrode 100 includes a support 1 and a catalyst layer 2. The catalyst layer 2 is provided on the support 1.

In this embodiment, the catalyst layer 2 is used as an electrolysis catalyst. Electrolysis reactions include, for example, generating hydrogen from water or ammonia, or generating ammonia from nitrogen. Electrolysis reactions also include, for example, generating carbon monoxide from carbon dioxide. The catalyst layer 2 is used as a catalyst in these reactions.

The electrode 100 of this embodiment can be used, for example, as an anode for water electrolysis. When a fuel cell catalyst is further included in the catalyst layer 2, the electrode 100 of this embodiment can also be used as an oxygen electrode for a fuel cell. The electrode 100 of this embodiment can also be used as an anode for electrochemically generating ammonia. The electrode of this embodiment can be used as an anode for an electrolyzer for ammonia synthesis. Hereinafter, water electrolysis will be described as an example in the first embodiment and other embodiments; however, the electrode 100 of this embodiment can be used as an anode for a membrane electrode assembly used for ammonia synthesis by electrolysis, where ultrapure water or an electrolyte is supplied to the anode, and water is decomposed at the anode to generate protons and oxygen, protons that have passed through the electrolyte membrane are supplied to the cathode, and ammonia is generated by the combination of protons, electrons, and nitrogen supplied to the cathode. The electrode 100 of this embodiment can also be used as a cathode for generating hydrogen from ammonia by electrolyzing. The electrode of this embodiment can also be used as a cathode for a hydrogen generation device. Hereinafter, water electrolysis will be described as an example in the first embodiment and other embodiments; however, the electrode 100 of this embodiment can be used as a cathode for a membrane electrode assembly used for ammonia decomposition by electrolysis where ammonia is supplied to the cathode, ammonia is decomposed at the cathode to generate protons and nitrogen, protons generated from passing through the electrolyte membrane are supplied to the anode, and hydrogen is generated by the combination of protons and electrons.

As for the support 1, it is preferable to use a material that is porous and has high conductivity. The support 1 is a porous member that allows gases and liquids to pass through.

The support 1 includes metal fibers or metal particles. Preferably, the support 1 includes metal fibers or metal particles of valve metal. The metal fibers and metal particles may be plated.

When the support 1 includes metal fibers, a fabric containing metal fibers is preferable. A mesh of metal fibers or a nonwoven fabric of metal fibers is preferable for the fabric containing metal fibers.

When the support 1 includes metal particles, a sintered body in which metal particles are agglomerated is preferable. Preferably, the metal particles are laminated in the thickness direction of the support 1.

The metal fiber preferably includes one or more metals selected from the group consisting of titanium, aluminum, tantalum, niobium, hafnium, zirconium, zinc, tungsten, bismuth, and antimony. More preferably, the metal fiber includes titanium. Even more preferably, the metal fiber preferably is composed of titanium.

The fiber diameter (diameter) of the metal fiber is preferably 1 [µm] or more and 500 [µm] or less. Considering reactivity and feed-ability, 1 [µm] or more and 100 [µm] or less is more preferable. The average fiber diameter (average diameter) of the metal fiber is preferably 1 [µm] or more and 500 [µm] or less. Considering reactivity and feed-ability, 1 [µm] or more and 100 [µm] or less is more preferable.

The metal particles preferably include one or more metals selected from the group consisting of Ti, Al, Ta, Nb, Hf, Zr, Zn, W, Bi, and Sb. More preferably, the metal particles include Ti. Even more preferably, the metal particles are composed of Ti.

The primary particle diameter (primary diameter) of the metal particles is preferably 1 [µm] or more and 500 [µm] or less. Considering reactivity and feed-ability, 1 [µm] or more and 100 [µm] or less is more preferable. The average primary particle diameter (primary average diameter) of the metal particles is preferably 1 [µm] or more and 500 [µm] or less. Considering reactivity and feed-ability, 1 [µm] or more and 100 [µm] or less is more preferable.

The support 1 is a conductive porous body. The porosity of the support 1 is preferably 20 [vol%] or more and 95 [vol%] or less, considering the movement of substances; more preferably, the porosity of the support 1 is 40 [vol%] or more and 90 [vol%] or less.

The support 1 has a first surface A and a second surface B on the opposite side to the first surface A. The first surface A and the second surface B are the main surface of the support 1. The first surface A and the second surface B of the support 1 are planar or substantially planar. The catalyst layer 2 is provided on the first surface A side of the support 1.

Preferably, the catalyst layer 2 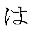 one or more elements selected from the group consisting of Ir, Ru, Pt, Pd, Ni, Co, Mn, Fe, Cu, V, Au, Cr, Sr, Y, Ag, Sn, Mo, Ti, Al, Ta, Nb, Hf, Zr, Zn, W, Bi, and Sb. Preferably, the catalyst layer 2 includes an oxide including one or more elements selected from the group consisting of Ir, Ru, Pt, Pd, Ni, Co, Mn, Fe, Cu, V, Au, Cr, Sr, Y, Ag, Sn, Mo, Ti, Al, Ta, Nb, Hf, Zr, Zn, W, Bi, and Sb.

The catalyst layer 2 preferably includes one or more noble metal oxides selected from the group consisting of Ir, Ru, Pt, and Pd.

The catalyst layer 2 is preferably a porous body. The porosity of the catalyst layer 2 is preferably 10 [vol%] or more and 90 [vol%] or less, and more preferably, 30 [vol%] or more and 70 [vol%] or less.

The amount of the noble metal in the catalyst layer 2 is preferably 0.01 [mg/cm²] or more and 1.0 [mg/cm²] or less, more preferably 0.03 [mg/cm²] or more and 0.5 [mg/cm²] or less, and even more preferably 0.04 [mg/cm²] or more and 0.1 [mg/cm²] or less. This total mass (amount of the noble metal) can be measured by ICP-MS.

The thickness of the catalyst layer 2 is preferably 0.1 [µm] or more and 2 [µm] or less, and more preferably 0.5 [µm] or more and 1 [µm] or less.

The catalyst layer 2 preferably has a structure in which sheet layers 2A and gap layers 2B are laminated alternately. FIG. 2 and FIG. 3 show partial cross-sectional diagrams of the electrode illustrating the laminated structure of the catalyst layer 2 provided on the support 1. The sheet layers 2A and the gap layers 2B are roughly parallel to each other. The gap layers 2B are mostly hollow, but a part of the sheet layers 2A protrudes and connects the sheet layers 2A. The sheet layers 2A are connected by columnar structures 2C existing in the gap layers 2B, thereby maintaining the laminated structure. The difference between FIG. 2 and FIG. 3 is whether the layer on the support 1 side is the sheet layer 2A (FIG. 2) or the gap layer 2B (FIG. 3).

The alternately laminated structure of the sheet layers 2A and the gap layers 2B can be identified, for example, by specifying the density variation in the cross-sectional SEM image of the catalyst layer 2.

The sheet layers 2A are layers where unsupported catalyst particles, such as metal oxide particles, are arranged in a sheet-like manner. There are some voids within the sheet layers 2A. The sheet layers 2A are dense layers containing many catalyst particles.

The gap layers 2B are regions sandwiched between the sheet layers 2A and contain catalyst particles, which are unsupported metal oxide particles. Unlike the sheet layers 2A, the gap layers 2B do not have a regular structure of catalyst particles. The gap layers 2B are regions with low catalyst particle density. The columnar structures 2C exist in the gap layers 2B. The columnar structures 2C existing in the gap layers 2B are aggregated unsupported metal oxide particles, for example, which extend along the lamination direction of the sheet layers 2A and the gap layers 2B and connect the sheet layers 2A in the lamination direction.

The average thickness of one layer of the sheet layers 2A is preferably 10 [nm] or more and 200 [nm] or less, more preferably 10 [nm] or more and 100 [nm] or less, and even more preferably, 10 [nm] or more and 50 [nm] or less.

The porosity of the sheet layers 2A is preferably 20 [vol%] or more and 80 [vol%] or less, more preferably 30 [vol%] or more and 70 [vol%] or less, and even more preferably 40 [vol%] or more and 60 [vol%] or less.

The average thickness of one layer of the gap layers 2B is preferably 10 [nm] or more and 200 [nm] or less, more preferably 10 [nm] or more and 100 [nm] or less, and even more preferably 10 [nm] or more and 50 [nm] or less.

When the average thickness of one layer of the gap layers 2B is represented as d1, the thickness of one layer of the sheet layers 2A is preferably 0.5 times d1 or more and 10 times d1 or less, more preferably 1 time d1 or more and 5 times d1 or less, and even more preferably 2 times d1 or more and 4 times d1 or less.

When the porosity of the gap layers 2B is represented as d2, the porosity of the sheet layers 2A is preferably 0.5 times d2 or more and 5 times d2 or less, more preferably 1 time d2 or more and 4 times d2 or less, and even more preferably 2 times d2 or more and 3 times d2 or less.

The gap layers 2B preferably includes an oxide (oxide of first element) including one or more elements (first element) selected from the group consisting of Ti, Al, Ta, Nb, Hf, Zr, Zn, W, Bi, and Sb. A first oxide including the first element which is one or more elements selected from the group consisting of Ti, Al, Ta, Nb, Hf, Zr, Zn, W, Bi, and Sb in the gap layers is the oxide of the first element which is one or more elements selected from the group consisting of Ti, Al, Ta, Nb, Hf, Zr, Zn, W, Bi, and Sb. The oxide of the first element which is one or more elements selected from the group consisting of Ti, Al, Ta, Nb, Hf, Zr, Zn, W, Bi, and Sb is an oxide with poor dissolubility during dissolving process to form the gap layers 2B.

The gap layers 2B preferably includes an oxide (oxide of second element) including one or more elements (second element) selected from the group consisting of Ni, Co, Mn, and Fe. A second oxide including the first element which is one or more elements selected from the group consisting of Ni, Co, Mn, and Fe in the gap layers 2B is the oxide of the first element which is one or more elements selected from the group consisting of Ti, Al, Ta, Nb, Hf, Zr, Zn, W, Bi, and Sb. The second oxide including the second element which is one or more elements selected from the group consisting of Ni, Co, Mn, and Fe is an oxide with high dissolubility during dissolving process to form the gap layers 2B.

Preferably, the gap layers 2B include the first oxide including one or more elements selected from the group consisting of Ti, Al, Ta, Nb, Hf, Zr, Zn, W, Bi, and Sb, and further include the second oxide including one or more elements selected from the group consisting of Ni, Co, Mn, and Fe.

By including a first oxide including one or more elements selected from the group consisting of Ti, Al, Ta, Nb, Hf, Zr, Zn, W, Bi, and Sb in the gap layers 2B, the rise in diffusion overpotential can be small even when the electrolysis operation time is extended. This means that the structural stability of the entire catalyst layer 2 is improved. When the structural stability of the entire catalyst layer 2 is improved, the degradation of the catalyst layer 2 can be reduced. Even when the amount of noble metal catalyst used in electrode production is reduced, the catalyst layer 2 with a first oxide including one or more elements selected from the group consisting of Ti, Al, Ta, Nb, Hf, Zr, Zn, W, Bi, and Sb in the gap layers 2B can maintain a low cell voltage.

The preferable ratios shown below are the ratios when the electrode 100 is fabricated.

The total mass of the first oxide including one or more elements selected from the group consisting of Ti, Al, Ta, Nb, Hf, Zr, Zn, W, Bi, and Sb included in the gap layers 2B is preferably 20 [wt%] or more and 80 [wt%] or less of the total mass of the gap layers 2B. More preferably, the total mass of the first oxide included in the gap layers 2B is 20 [wt%] or more and 70 [wt%] or less of the total mass of the gap layers 2B. Even more preferably, the total mass of the first oxide included in the gap layers 2B is 30 [wt%] or more and 60 [wt%] or less of the total mass of the gap layers 2B.

The total mass of the first oxide including one or more elements selected from the group consisting of Ti, Al, Ta, Nb, Hf, Zr, Zn, W, Bi, and Sb among all the gap layers 2B including the first oxide is preferably 20 wt% or more and 80 [wt%] or less of the total mass of the gap layers 2B including the first oxide. More preferably, the total mass of the first oxide among all the gap layers 2B including the first oxide is 30 [wt%] or more and 70 [wt%] or less of the total mass of the gap layers 2B including the first oxide. Even more preferably, the total mass of the first oxide among all the gap layers 2B including the first oxide is 40 [wt%] or more and 60 [wt%] or less of the total mass of the gap layers 2B including the first oxide.

For example, when the initial cell voltage of a catalyst layer with a high Ir content is set to 100 in a case where the gap layers 2B do not include the first oxide including one or more elements selected from the group consisting of Ti, Al, Ta, Nb, Hf, Zr, Zn, W, Bi, and Sb, the cell voltage of the catalyst layer 2 with a low Ir content including the first oxide will be larger than 100. However, after long-term operation, the cell voltage of the catalyst layer 2 with a low Ir content and the gap layers 2B including the first oxide including one or more elements selected from the group consisting of Ti, Al, Ta, Nb, Hf, Zr, Zn, W, Bi, and Sb will be smaller than that of a catalyst layer with high Ir content but without gap layers 2B including the first oxide. Therefore, in embodiments of the electrode 100, the effect of durability improvement is significant when the noble metal content is low (for example, the noble metal content of the catalyst layer 2 is 0.01 [mg/cm²] or more and 0.1 [mg/cm²] or less).

For example, the Ir content in the catalyst layer 2 can be reduced by making the sheet layers 2A thinner or reducing the number of repeating layers of sheet layers 2A and gap layers 2B.

The total mass of the first oxide including one or more elements selected from the group consisting of Ti, Al, Ta, Nb, Hf, Zr, Zn, W, Bi, and Sb included in the sheet layers 2A is preferably 0 [wt%] or more and 80 [wt%] or less of the total mass of the first oxide included in the gap layers 2B. More preferably, the total mass of the first oxide included in the sheet layers 2A is 20 [wt%] or more and 70 [wt%] or less of the first oxide included in the gap layers 2B. Even more preferably, the total mass of the first oxide included in the sheet layers 2A is 30 [wt%] or more and 60 [wt%] or less of the first oxide included in the gap layers 2B.

The first element included in the first oxide is preferably one or more elements selected from the group consisting of Ti, Al, Ta, Nb, Hf, Zr, Zn, W, Bi, and Sb, more preferably one or more elements selected from the group consisting of Ti, Ta, Nb, Hf, Zr, Zn, W, and Sb, and even more preferably one or more elements selected from the group consisting of Ti, Ta, Nb, Hf, Zr, and W.

Preferably, the first oxide including the first element is included less in the sheet layers 2A and more in the gap layers 2B than the sheet layers 2A. When the first oxide including the first element is included more in the sheet layers 2A, the catalytic activity of the catalyst layer 2 will decrease. Preferably, the first oxide of the first element is selectively (concentratedly) included in the gap layers 2B rather than being included throughout the entire catalyst layer 2.

The total mass of the second oxide including one or more elements selected from the group consisting of Ni, Co, Mn, and Fe included in the sheet layers 2A is preferably 20 [wt%] or more and 80 [wt%] or less of the total mass of the second oxide included in the gap layers 2B, more preferably 30 [wt%] or more and 70 [wt%] or less of the total mass of the second oxide included in the gap layers 2B, and even more preferably 40 [wt%] or more and 60 [wt%] or less of the total mass of the second oxide included in the gap layers 2B.

The second element included in the second oxide is preferably one or more selected from the group consisting of Ni, Co, Mn, and Fe, more preferably one or more selected from the group consisting of Ni and Co, and even more preferably Ni.

Preferably, the second oxide including the second element is included less in the sheet layers 2A and more in the gap layers 2B. When the second oxide including the second element is included more in the sheet layers 2A, the catalytic activity of the catalyst layer 2 will decrease. Preferably, the second oxide of the second element is selectively (concentratedly) included in the gap layers 2B rather than being included throughout the entire catalyst layer 2.

The total mass of the first oxide including one or more elements selected from the group consisting of Ti, Al, Ta, Nb, Hf, Zr, Zn, W, Bi, and Sb included in the sheet layers 2A is preferably 10 [wt%] or more and 90 [wt%] or less, more preferably 20 [wt%] or more and 80 [wt%] or less, and even more preferably 30 [wt%] or more and 70 [wt%] or less of the total mass of the first oxide included in the gap layers 2B. the total mass of the second oxide including one or more elements selected from the group consisting of Ni, Co, Mn, and Fe included in the sheet layers 2A is preferably 10 [wt%] or more and 90 [wt%] or less, more preferably 20 [wt%] or more and 80 [wt%] or less, and even more preferably 30 [wt%] or more and 70 [wt%] or less of the total mass of the second oxide included in the gap layers 2B.

The total mass of the first oxide including one or more elements selected from the group consisting of Ti, Al, Ta, Nb, Hf, Zr, Zn, W, Bi, and Sb included in the gap layers 2B is preferably 20 [wt%] or more and 80 [wt%] or less, more preferably 30 [wt%] or more and 70 [wt%] or less, and even more preferably 40 [wt%] or more and 60 [wt%] or less of the total mass of the second oxide including one or more elements selected from the group consisting of Ni, Co, Mn, and Fe.

From the viewpoint of balancing the high catalytic activity and structural stability improvement of the catalyst layer 2, it is preferable that the ratio of the total mass of the first oxide including the first element in the gap layers 2B to the total mass of the second oxide including the second element satisfies the above conditions. When the ratio of the first oxide of the first element in the gap layers 2B is relatively high, the void ratio of the gap layers 2B becomes higher. When the ratio of the second oxide of the second element in the gap layers 2B is relatively high, the void ratio of the gap layers 2B becomes lower.

The first oxide including the first element and the second oxide including the second element may be presented as different oxides, or may present as a composite oxide of the first oxide and the second oxide in the catalyst layer 2, or the first oxide including the first element, the second oxide including the second element and the composite oxide of the first oxide and the second oxide may present in the catalyst layer 2. The oxide ratio in the specification is the ratio considering composite oxides.

The catalyst layer 2 includes two or more gap layers 2B. It is preferable that one or more gap layers 2B include the first oxide of the first element. When the number of the gap layers 2B which do not include the first oxide including the first element is n, the number of the gap layers 2B including the first oxide including the first element is preferably 1 × n (n times) or more and 10 × n (ten times n) or less, more preferably 3 × n (three times n) or more and 7 × n (seven times n) or less, even more preferably 4 × n (four times n) or more and 6 × n (six times n) or less.

The total mass of the oxide (third oxide) of a noble metal (third element) selected from the group consisting of Ir, Ru, Pt, and Pd included in the gap layers 2B is preferably 10 [wt%] or more and 80 [wt%] or less, more preferably 20 [wt%] or more and 70 [wt%] or less, even more preferably 30 [wt%] or more and 60 [wt%] or less of the total mass of the oxide (third oxide) of a third element selected from the group consisting of Ir, Ru, Pt, and Pd included in the sheet layers 2A.

It is preferable that the third oxide of the third element is less in the gap layers 2B and more in the sheet layers 2A. It is preferable that the third oxide of the third element is selectively (concentratedly) included in the sheet layers 2A rather than being included in the entire catalyst layer 2.

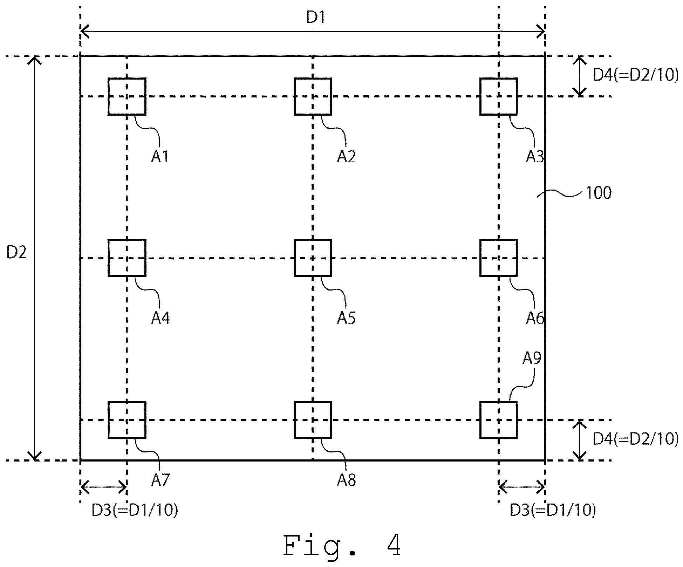

The specific locations of the sheet layers 2A and the gap layers 2B, the distribution of the first oxide, the distribution of the second oxide, and the distribution of the third oxide in the catalyst layer 2 can be determined by observing cross sections at multiple analysis spots. As shown in FIG. 4, when the length D1 and the width D2 (D1 ≥ D2) of the electrode 100 are defined, virtual lines are drawn inward from each side opposite to the width direction of the electrode 100 at a distance of D3 (= D1/10), virtual lines are drawn inward from each side opposite to the length direction at a distance of D4 (= D2/10), and a virtual line is drawn parallel to the width direction through the center of the electrode 100, and a virtual line is drawn parallel to the length direction through the center of the electrode 100. Analysis spots A1 to A9 are set as areas centered on the nine intersection points of the virtual lines. Each spot is a square shape having an area of at least 10 [µm²]. An image observed for each spot may be a mosaic image obtained by combining multiple raster images. The observation cross-section by SEM-EDX or TEM-EDX is perpendicular to the plane of FIG. 1 and parallel to the width direction. The thickness of each gap layer 2B at each analysis spot A1 to A9 is determined from a SEM image or a TEM image at intervals of 50 [nm] in the width direction. The ratio of the catalyst layer 2 provided at specific locations is set as an average value for each spot. The ratio of the catalyst layer 2 provided at specific locations can be calculated from the volume of the catalyst layer 2 and the ratio.

Next, one example of a method for manufacturing the electrode 100 will be described. Sheet layer precursor, which is substantially a precursor of sheet layers 2A, and gap layer precursor, which is substantially a precursor of gap layers 2B, are alternately sputtered onto a support 1 by sputtering. A target containing the third element is used when forming the sheet layer precursor. A target containing the first element and the second element is used when forming the gap layer precursor. The sheet layer precursor and the gap layer precursor are formed in an oxidizing atmosphere. The resulting laminate with the sheet layer precursor and the gap layer precursor alternately stacked is treated with a solution in which the second oxide containing the second element of the gap layer precursor is selectively dissolved. Examples of the dissolving solution include sulfuric acid, hydrochloric acid, or nitric acid. After the solution treatment, the electrode 100 is obtained by performing heat treatment in an oxidizing atmosphere if desired.

The catalyst layer 2 in the embodiment of the electrode 100 has improved structural stability. The embodiment of the electrode 100 exhibits high durability and high electrolytic properties as an electrolytic electrode.

### (SECOND EMBODIMENT)

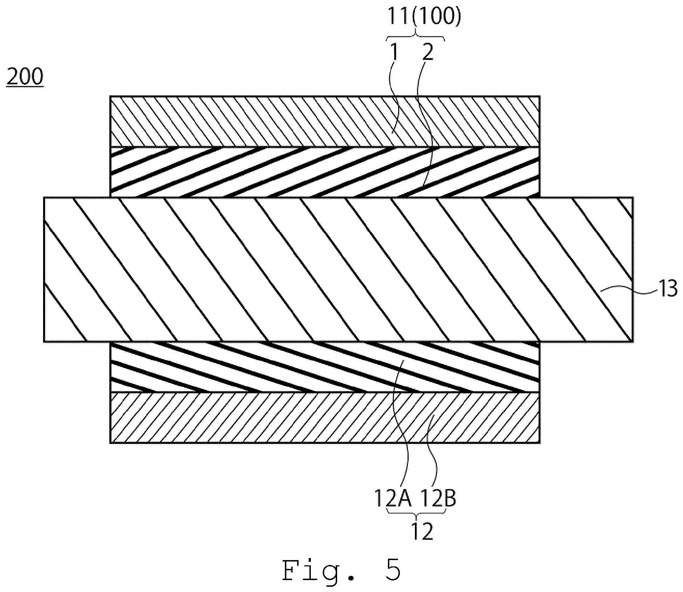

A second embodiment relates to a membrane electrode assembly (MEA). FIG. 5 shows a schematic diagram of a membrane electrode assembly 200 of the embodiment. The membrane electrode assembly comprises: a first electrode 11; a second electrode; and an electrolyte membrane (separating membrane) 13. The first electrode 11 is an anode, preferably. The second electrode 12 is a cathode, preferably. Preferably, the electrode 100 is used for the first electrode 11 or/and the second electrode 12. The

The first electrode 11 includes a first support 11B and a first catalyst layer 11A. The first catalyst layer 11A is provided on the first support 11B. Preferably, the first catalyst layer 11A is in direct contact with the electrolyte membrane 13. When the electrode 100 is used for the first electrode 11, the first catalyst layer 11A is the catalyst layer 2, and the first support 11B is the support 1.

The second electrode 12 includes a second support 12B and a second catalyst layer 12A. The second catalyst layer 12A is provided on the second support 12B. The second catalyst layer 12A is provided on the electrolyte membrane 13 side. Preferably, the second catalyst layer 12A is in direct contact with the electrolyte membrane 13.

The second support 12B is preferably made of a porous and highly conductive material. The second support 12B is a porous member that allows gas or liquid to pass through. For example, the second support 12B may be carbon paper or a metal mesh. As for the metal mesh, a porous base material of valve metal is preferable. A porous base material of valve metal is preferably a porous base material containing one or more metals selected from the group consisting of titanium, aluminum, tantalum, niobium, hafnium, zirconium, zinc, tungsten, bismuth and antimony, or a porous base material of a single metal selected from the group consisting of titanium, aluminum, tantalum, niobium, hafnium, zirconium, zinc, tungsten, bismuth and antimony. The second support 12B has a carbon layer (MPL layer) containing carbon particles and a water-repellent resin (PTFE or a fluorine resin such as Nafion). The carbon layer is provided, for example, between the carbon paper and the second catalyst layer 12A.

The second catalyst layer 12A includes a catalyst metal. It is preferable that the catalyst metal particles are not supported by a support in the second catalyst layer 12A. The second catalyst layer 12A is preferably a porous catalyst layer. Examples of catalyst metals include, but are not limited to, one or more selected from the group consisting of Pt, Rh, Os, Ir, Pd and Au. It is preferable that the catalyst metal is a metal, alloy or metal oxide. The second catalyst layer 12A may preferably have multiple catalyst units in which sheet-like catalyst layers and gap layers are alternately stacked.

The loading amount of noble metal per unit area in the second catalyst layer 12A is preferably 0.02 [mg/cm²] or more and 1.0 [mg/cm²] or less, and more preferably 0.05 [mg/cm²] or more and 0.5 [mg/cm²] or less. The total loading amount can be measured by ICP-MS.

The loading amount [mg/cm²] of noble metal (wherein the noble metal is selected from one or more elements from the group consisting of Ir, Ru, Pt, and Pd) per unit area of the first catalyst layer 11A of the anode is preferably 5% or more and 35% or less of the loading amount [mg/cm²] of noble metal (wherein the noble metal is selected from one or more elements from the group consisting of Ir, Ru, Pt, and Pd) per unit area of the second catalyst layer 12A of the cathode. More preferably, it is 7% or more and 30% or less. Even more preferably, it is 7% or more and 20% or less. By using the electrode 100 according to the first embodiment for the anode, high activity and durability can be achieved with a relatively small amount of noble metal compared to the cathode.

The porosity of the second catalyst layer 12A is preferably 10 [vol%] or more and 90 [vol%] or less, and more preferably 30 [vol%] or more and 70 [vol%] or less.

The electrolyte membrane 13 is preferably a proton conductive membrane. As the electrolyte membrane 13, a fluorine-based polymer or an aromatic hydrocarbon polymer containing one or more selected from the group consisting of sulfonic acid groups, sulfonimide groups and sulfuric acid groups is preferable. As the electrolyte membrane 13, a fluorinated polymer having a sulfonic acid group is preferable. Examples of fluorinated polymers with sulfonic acid groups include Nafion (trademark: DuPont), Flemion (trademark: Asahi Kasei Corp.), Selemion (trademark: Asahi Kasei Corp.), Aquivion (trademark: Solvay Specialty Polymers) or Aciplex (trademark: Asahi Glass Co., Ltd.). It is possible to use various conductive membranes such as anion exchange membranes and porous membranes instead of the proton conductive membrane.

The thickness of the electrolyte membrane 13 can be appropriately determined by considering characteristics such as film permeability and durability. From the standpoint of strength, solubility and MEA output characteristics, the thickness of the electrolyte membrane 13 is preferably 20 [µm] or more and 500 [µm] or less, more preferably 50 [µm] or more and 300 [µm] or less, and even more preferably 80 [µm] or more and 200 [µm] or less.

The electrolyte membrane 13 preferably includes a noble metal region on the side of the first electrode 11. The noble metal region includes noble metal particles. The noble metal region is preferably present on the surface of the electrolyte membrane 13. The noble metal region may be composed of one region, but may also be composed of multiple separate regions.

The noble metal particles are preferably particles of one or more noble metals selected from the group consisting of Pt, Re, Rh, Ir, Pd and Ru. The noble metal particles may include alloy particles containing one or more noble metals selected from the group consisting of Pt, Re, Rh, Ir, Pd and Ru. It is preferable that the noble metal particles are particles of a single noble metal selected from the group consisting of Pt, Re, Rh, Ir, Pd and Ru. It is preferable that the noble metal particles are Pt particles. It is preferable that the noble metal particles are Re particles. It is preferable that the noble metal particles are Rh particles. It is preferable that the noble metal particles are Ir particles. It is preferable that the noble metal particles are Pd particles. It is preferable that the noble metal particles are Ru particles.

The noble metal particles oxidize hydrogen generated on the cathode side and passing through the electrolyte membrane 13. The presence of noble metal particles can reduce hydrogen leakage. Since the noble metal particles exist on the anode side, it is difficult to oxidize hydrogen discharged from the cathode side. The region where noble metal particles exist may also exist on the side of the second electrode 12 (cathode) of the electrolyte membrane 13.

The average outer diameter of the noble metal particles is preferably 0.5 [nm] or more and 50 [nm] or less, more preferably 1 [nm] or more and 10 [nm] or less, and even more preferably 1 [nm] or more and 5 [nm] or less.

By using the electrode 100 having high durability and performance as the anode of the membrane electrode assembly 200, it is possible to operate for a long time with high activity.

### (THIRD EMBODIMENT)

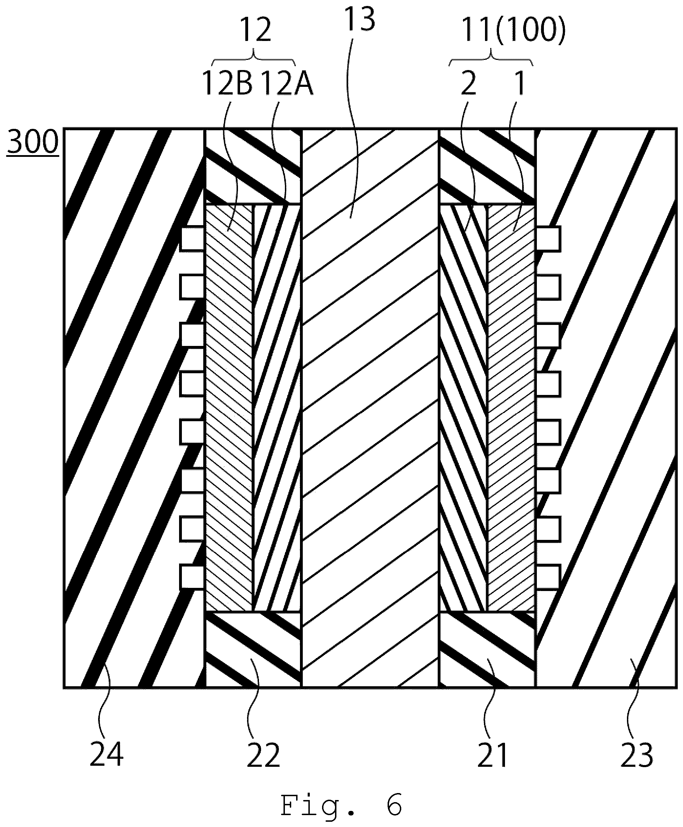

A third embodiment relates to an electrochemical cell. FIG. 6 shows a schematic cross-sectional diagram of an electrochemical cell 300 of the third embodiment. Hereinafter, the electrochemical cell 300, for example, for electrolyzing water will be described. The electrochemical cell may be also used for, for example, generating hydrogen by electrolyzing ammonia.

As shown in FIG. 6, the electrochemical cell 300 of the second embodiment includes a first electrode (anode) 11, a second electrode (cathode) 12, an electrolyte membrane 13, gaskets 21 and 22, separators 23 and 24. A sealing material for the first electrode 11 can be used as the gasket 21. A sealing material of the second electrode 12 can be used as the gasket 22.

It is preferable to use the membrane electrode assembly (MEA) 200 in which the first electrode (anode) 11, the second electrode (cathode) 12 and the electrolyte membrane 13 are joined for the electrochemical cell 300. An anode feeder may be provided separately from separator 23. A cathode feeder may be provided separately from separator 24.

In the electrochemical cell 300 of FIG. 6, a power supply (not shown) is connected to separators 23 and 24, and reactions occur at the first electrode 11 and the second electrode 12. For example, water is supplied to the first electrode 11, and the water is decomposed into protons, oxygen and electrons at the first electrode 11. Since the electrode support and feeder are porous bodies, these porous bodies function as flow channel plates. The generated water and unreacted water are discharged, and the protons and electrons are utilized for the cathode reaction. In the cathode reaction, the protons and electrons react to generate hydrogen. The generated hydrogen and/or oxygen are used, for example, as fuel for a fuel cell.

### (FOURTH EMBODIMENT)

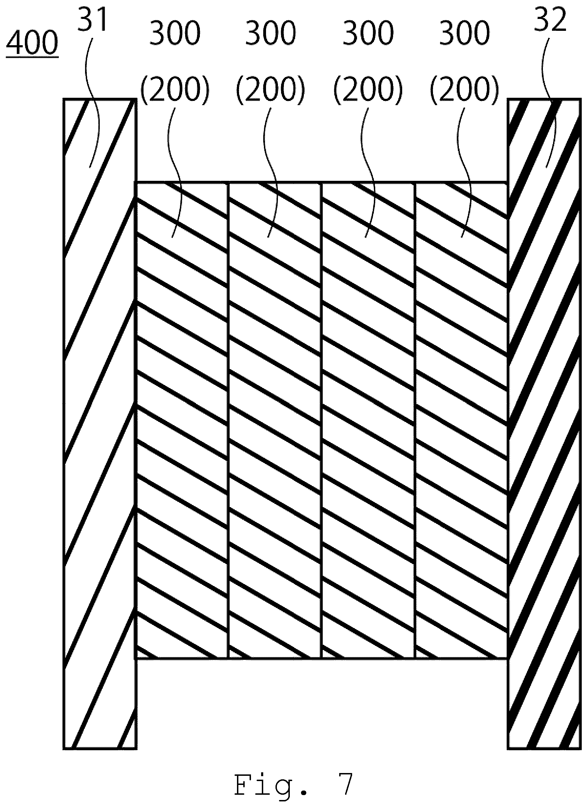

A fourth embodiment relates to a stack. FIG. 7 shows a schematic cross-sectional diagram of a stack 400 according to the fourth embodiment. The stack 400 of the fourth embodiment shown in FIG. 7 is formed by connecting multiple MEAs 200 or electrochemical cells 300 in series. Clamping plates 31 and 32 are attached to both ends of the MEA or the electrochemical cell.

Since the amount of hydrogen generated in the single electrochemical cell 300 comprising one MEA 200 is small, the stack 400 is constructed by connecting multiple MEAs 200 or multiple electrochemical cells 300 in series to obtain a large amount of hydrogen.

### (FIFTH EMBODIMENT)

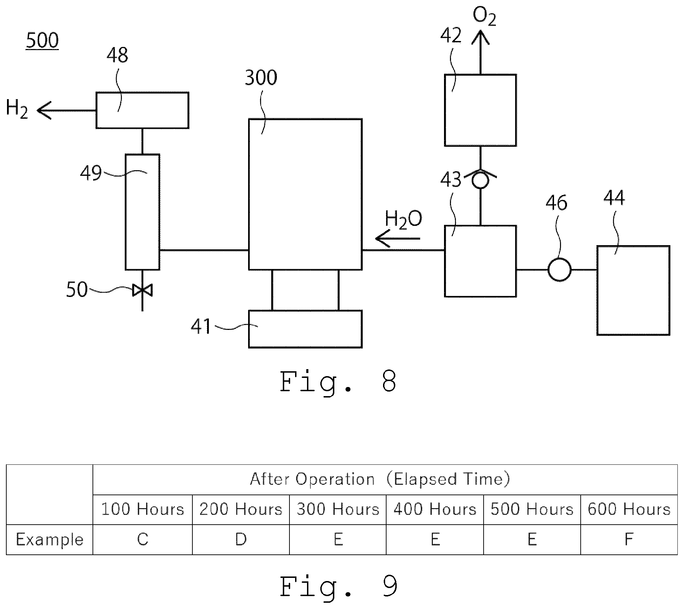

A fifth embodiment relates to an electrolyzer. FIG. 8 shows a a schematic diagram of the electrolyzer 500 according to the fifth embodiment. The electrolyzer 500 uses the electrochemical cell 300 or the stack 400. The electrolyzer shown in FIG. 8 is for water electrolysis. Explanation about the electrolyzer for water electrolysis will be given below. When hydrogen is generated from ammonia, for example, it is preferable to adopt a different configuration using electrode 100. It is also possible to use the electrode of this embodiment for an electrolyzer that electrolyzes carbon dioxide to produce organic substances such as methanol and ethylene or carbon monoxide.

As shown in FIG. 8, the stack 400 obtained by stacking single electrochemical cells for water electrolysis in series is used. A power supply 41 is connected to the stack 400, and a voltage is applied between the anode and cathode. An anode side of the stack 400 is connected to a gas-liquid separator 42 and a mixing tank 43 to separate the generated gas from unreacted water. The mixing tank 43 is supplied with water by pump 46 from an ion exchange water production apparatus 44, and the mixture is circulated to the anode through the gas-liquid separator 42 via check valve 47. Oxygen generated at the anode is obtained through the gas-liquid separator 42 as oxygen gas. On the cathode side, a hydrogen purification device 49 is connected to the gas-liquid separator 48 in series, and high purity hydrogen is obtained. Impurities are discharged through a path having valve 50 connected to the hydrogen purification device 49. To stably control the operating temperature, the stack and mixing tank can be heated and controlled, such as current density during thermal decomposition.

The invention will be explained more specifically with reference to examples hereinafter, but it is not limited to the following examples.

### (Example 1)

A nonwoven fabric of titanium metal fibers is used as a support, and a catalyst layer is formed on the support. The catalyst layer has a structure in which sheet layers and gap layers are stacked alternately 40 times each. Iridium oxide-containing sheet layer precursors and nickel oxide and tantalum oxide-containing gap layer precursors are formed alternately by sputtering in an oxidizing atmosphere. The noble metal loading density is 0.05 [mg/cm²]. Subsequently, most of the gap layer precursors are selectively dissolved with sulfuric acid to obtain the electrode according to the embodiment. The obtained electrode is used as the anode.

An electrode is obtained by forming a porous catalyst layer containing Pt on a carbon paper as a support. The obtained electrode is used as the cathode. The noble metal loading density is 0.4 [mg/cm²].

The obtained anode and cathode are sandwiched with a Nafion membrane as an electrolyte membrane and pressed to obtain a membrane electrode assembly. The obtained membrane electrode assembly is arranged between two flow-field separators, and the membrane electrode assembly sealed with gaskets is fixed to obtain an electrochemical cell.

Water electrolysis operation is performed for 48 hours at a measurement temperature of 80 [°C] and a current density of 2 [A/cm²] to evaluate the durability and cell voltage.

The obtained anode and cathode are sandwiched with a Nafion membrane as an electrolyte membrane and pressed to obtain a membrane electrode assembly. The obtained membrane electrode assembly is arranged between two separators with a flow-channel, and the membrane electrode assembly sealed with gaskets is fixed to obtain an electrochemical cell. Water electrolysis operation is performed for 48 hours at a measurement temperature of 80 [°C] and a current density of 2 [A/cm²] to evaluate the durability and cell voltage.

The cell voltages are evaluated after 100 hours, 200 hours, 300 hours, 400 hours, 500 hours, and 600 hours from the start of operation. The difference ([Comparative Example 1 Cell Voltage Increase Rate] - [Example 1 Cell Voltage Increase Rate]) between the cell voltage increase rate (increase in cell voltage from the start of operation to each elapsed time) of Example 1 and the cell voltage increase rate (increase in cell voltage from the start of operation to each elapsed time) of Comparative Example 1 is evaluated. When the difference is 0% or more and less than 0.5%, the cell voltage increase rate is evaluated as A. When the difference is 0.5% or more and less than 1.0%, the cell voltage increase rate is evaluated as B. When the difference is 1.0% or more and less than 1.5%, the cell voltage increase rate is evaluated as C. When the difference is 1.5% or more and less than 2.0%, the cell voltage increase rate is evaluated as D. When the difference is 2.0% or more and less than 2.5%, the cell voltage increase rate is evaluated as E. When the difference is 2.5% or more and less than 3.0%, the cell voltage increase rate is evaluated as F.

### (Comparative Example 1)

An anode is fabricated in the same manner as Example 1, except that tantalum oxide is not included in the gap layer precursor. An electrochemical cell is fabricated using the fabricated anode, and the cell voltage is measured under the same conditions as Example 1.

A summary of the cell voltage increase rates of Example 1 compared to Comparative Example 1 is shown in a table of FIG. 9. The cell voltage increase rate of Example 1 is smaller than that of Comparative Example 1. As shown in the table of FIG. 9, the cell voltage increase rate of the comparative example becomes larger over time, and the cell voltage increase rate of Example 1 does not change much over time. Therefore, it can be seen that the difference between the cell voltage increase rates of Example 1 and Comparative Example 1 becomes larger over time. Furthermore, when evaluating the diffusion overpotential of Example 1 and Comparative Example 1, the increase in diffusion overpotential of Example 1 is smaller than that of Comparative Example 1. The diffusion overpotential can evaluate the collapse of the catalyst layer structure, and it indicates that the electrode of Example 1 has high durability.

### (Example 2)

An anode is fabricated in the same manner as Example 1 except for increasing the ratio of tantalum oxide in the gap layer precursor, and an electrochemical cell is fabricated using the fabricated anode. The cell voltage is measured under the same conditions as Example 1. The cell voltage increase rate of Example 2 is evaluated by comparing it with the cell voltage of Comparative Example 1.

### (Example 3)

An anode is fabricated in the same manner as Example 1 except for decreasing the ratio of tantalum oxide in the gap layer precursor, and an electrochemical cell is fabricated using the fabricated anode. The cell voltage is measured under the same conditions as Example 1. The cell voltage increase rate of Example 3 is evaluated by comparing it with the cell voltage of Comparative Example 1.

In Examples 2 and 3, the difference between the cell voltage increase rates of Example 1 and Comparative Example 1 becomes larger over time as in Example 1. Example 3 has a relatively smaller ratio of tantalum oxide in the gap layer, resulting in a relatively larger cell voltage increase rate; however, Example 3 effectively reduces the cell voltage increase compared to Comparative Example 1. In this embodiment, tantalum oxide is used, but if a first element oxide other than tantalum is used, it will also be less soluble than the second element oxide and remain in the gap layer. Therefore, even when an oxide of a first element other than tantalum is used, the cell voltage increase rate will be low and durability will be high, similar to Example 1.

In the specification, some elements are represented only by chemical symbols for elements.

While certain embodiments have been described, these embodiments have been presented by way of example only, and are not intended to limit the scope of the inventions. While PEMEC have been cited as an example of a water electrolysis cell, the present invention can be similarly applied to other types of electrolytic cells. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electrode (100) comprising:
a support (1); and
a catalyst layer (2) having a structure in which sheet layers (2A) and gap layers (2B) are laminated alternately, wherein
the gap layers (2B) comprise a first oxide comprising a first element which is one or more elements selected from the group consisting of Ti, Al, Ta, Nb, Hf, Zr, Zn, W, Bi, and Sb.

2. The electrode (100) according to claim 1, wherein
the gap layers (2B) comprise a second oxide comprising a second element which is one or more elements selected from the group consisting of Ni, Co, Mn, and Fe.

3. The electrode (100) according to claim 1, wherein
a total mass of the first oxide included in the gap layers (2B) is 20 wt% or more and 80 wt% or less of a total mass of the gap layers (2B).

4. The electrode (100) according to claim 1, wherein
a total mass of the first oxide included in the gap layers (2B) is 20 wt% or more and 80 wt% or less of a total mass of the gap layers (2B) including the first oxide.

5. The electrode (100) according to claim 1, wherein
a total mass of the first oxide included in the sheet layers (2A) is 0 wt% or more and 80 wt% or less of a total mass of the first oxide included in the gap layers (2B).

6. The electrode (100) according to claim 1, wherein
the first element in the first oxide is one or more elements selected from the group consisting of Ti, Ta, Nb, Hf, Zr, and W.

7. The electrode (100) according to claim 2, wherein
a total mass of the second oxide included in the sheet layers (2A) is 20 wt% or more and 80 wt% or less of a total mass of the second oxide included in the gap layers (2B).

8. The electrode (100) according to claim 1, wherein
when the number of the gap layers (2B) which do not include the first oxide is n,
a number of the gap layers (2B) including the first oxide is 1 × n or more and 10 × n or less.

9. The electrode (100) according to claim 1, wherein
an average thickness of one layer of the sheet layers (2A) is 10 nm or more and 200 nm or less, and
an average thickness of one layer of the gap layers (2B) is 10 nm or more and 200 nm or less.

10. The electrode (100) according to claim 1, wherein
the thickness of the catalyst layer (2) is 0.1 µm or more and 2 µm or less.

11. The electrode (100) according to claim 2, wherein
the catalyst layer (2) comprises a complex oxide of the first element and the second element.

12. The electrode (100) according to claim 1, wherein
a total mass of the first oxide included in the sheet layers (2A) is 10 wt% or more and 90 wt% or less of a total mass of the first oxide included in the gap layers (2B).

13. The electrode (100) according to claim 1, wherein
a total mass of the first oxide included in the gap layers (2B) is 20 wt% or more and 80 wt% or less of a total mass of the second oxide included in the gap layers (2B).

14. The electrode (100) according to claim 1, wherein
a total mass of the first oxide included in the gap layers (2B) is 20 wt% or more and 80 wt% or less of a total mass of the gap layers (2B),
the total mass of the first oxide included in the gap layers (2B) is 20 wt% or more and 80 wt% or less of the total mass of the gap layers (2B) including the first oxide, and
a total mass of the first oxide included in the sheet layers (2A) is 0 wt% or more and 80 wt% or less of the total mass of the first oxide included in the gap layers (2B).

15. The electrode (100) according to claim 2, wherein
a total mass of the second oxide included in the sheet layers (2A) is 20 wt% or more and 80 wt% or less of a total mass of the second oxide included in the gap layers (2B),
a total mass of the first oxide included in the sheet layers (2A) is 10 wt% or more and 90 wt% or less of a total mass of the first oxide included in the gap layers (2B), and
the total mass of the first oxide included in the gap layers (2B) is 20 wt% or more and 80 wt% or less of the total mass of the second oxide included in the gap layers (2B).
